# EUROPÄISCHE PATENTSCHRIFT

(11) **EP 1 288 635 B1**
(45) Veröffentlichungstag und Bekanntmachung des Hinweises auf die Patenterteilung: **01.05.2013**
(21) Anmeldenummer: 02014681.7
(22) Anmeldetag: 03.07.2002
(51) Int. Cl.: G01B 11/04, G01F 23/292, G01N 35/10, G01N 35/02, G01B 11/02, G02B 21/00, G01S 17/02

(54) **Vorrichtung zur Behandlung von Flüssigkeiten und Verfahren zum Betreiben der Vorrichtung**
Treatment device for fluids and method for operating the device
Dispositif de traitement des fluides et procédé d' opération du dispositif

(30) Priorität: 24.08.2001 DE 10141544
(43) Veröffentlichungstag der Anmeldung: 05.03.2003
(60) Teilanmeldung: 10012054.2
(73) Patentinhaber: EPPENDORF AG, 22339 Hamburg (DE)
(72) Erfinder: Spolaczyk, Reiner, Dr., 22397 Hamburg (DE)
(74) Vertreter: Hauck Patent- und Rechtsanwälte

(56) Entgegenhaltungen:
- EP-A- 0 250 671
- EP-A- 0 866 336
- WO-A-00/36400
- CH-A- 499 096
- US-A- 5 737 084

## Beschreibung

Die Erfindung bezieht sich auf eine Vorrichtung zur Behandlung von Flüssigkeiten und auf ein Verfahren zum Betreiben der Vorrichtung.

Eine Vorrichtung zum Behandeln von Flüssigkeiten kann insbesondere eine Vorrichtung zum Dosieren und/oder Transportieren und/oder Untersuchen und/oder Bearbeiten (z.B. chemisch, physikalisch oder biologisch) von Flüssigkeiten sein. Bei bekannten Vorrichtungen werden die Abläufe entweder manuell oder zum Teil oder vollständig automatisiert durchgeführt. So sind beispielsweise für das Dosieren manuelle Pipetten, PC-unterstützte Dosiersysteme und vollautomatische Dosierstationen bekannt. Für das Dosieren, Transportieren, Untersuchen und Behandeln von Flüssigkeiten gibt es vollautomatische Behandlungsstationen (sogenannte "Workstations").

Sowohl beim manuellen als auch beim automatischen Pipettieren muß bei der Flüssigkeitsaufnahme einerseits die Pipettenspitze in die Flüssigkeit eingetaucht werden, andererseits jedoch nur mit einer möglichst geringen Eintauchtiefe, weil der Fehler der Dosierung mit Eintauchtiefe steigt und bei einem tiefen Eintauchen die Pipettenspitze bzw. das die Flüssigkeit aufnehmende Gefäß beschädigt werden können. Bei manuellen Pipetten muß dies vom Benutzer durch genaues Kontrollieren des Eintauchens der Pipettenspitze sichergestellt werden. Bei automatischen Dosiervorrichtungen werden hierfür Überwachungseinrichtungen eingesetzt.

So ist es bereits bekannt, leitfähige Pipettenspitzen oder besondere leitfähige Sensoren zu verwenden, deren Annäherung an die Flüssigkeit durch eine Kapazitätsmessung oder deren Eintauchen in die Flüssigkeit durch eine Widerstandsmessung überwacht wird. Diese Lösungen sind jedoch an leitfähige Flüssigkeiten gebunden oder erfordern, daß die Sensoren kleine Abstände von den Flüssigkeiten haben oder in diese eintauchen. Bei leitfähigen Pipettenspitzen sind die Kosten für das Verbrauchsmaterial relativ hoch. Das Einführen besonderer Levelsensoren in Gefäße, in denen sich die Flüssigkeit befindet, kann bei der Behandlung der Proben stören.

Aus der WO 0042384 A1 ist ein Detektionssystem für Flüssigkeitsspiegel für den Einsatz in automatischen Workstations bekannt. Das System hat eine Beleuchtungsquelle und einen Fotodetektor, die auf die Flüssigkeit und in einem Winkel aufeinander gerichtet sind. Die Beleuchtungsquelle erzeugt einen Lichtstrahl, den der Fotodetektor detektieren kann, wenn er von der Flüssigkeitsoberfläche reflektiert wird. Das Ausgangssignal des Fotodetektors variiert entsprechend der Intensität der reflektierten Strahlung, die auf ihn trifft. Dieses Ausgangssignal variiert wiederum, wenn der Fotodetektor (und die Beleuchtungsquelle) sich der Flüssigkeitsoberfläche annähert, indem es zunächst zunimmt und dann abnimmt, da sich der reflektierte Lichtstrahl von der einen Seite auf die andere Seite des Fotodetektors bewegt.

Der Strahlengang der Optik wird durch die Öffnung eines Gefäßes hineingeführt, in dem sich die Flüssigkeit befindet. Der erforderliche Winkel zwischen dem einfallenden und dem ausfallenden Strahl begrenzt die Anwendung auf Gefäße, die einen verhältnismäßig großen Durchmesser bzw. eine verhältnismäßig geringe Tiefe aufweisen. Bei Gefäßen mit verhältnismäßig geringem Durchmesser bzw. verhältnismäßig großer Tiefe würde hingegen der Strahlengang am Öffnungsrand unterbrochen, so daß keine Messung mehr möglich wäre.

Aus der Druckschrift WO 00/36400 A1 ist eine Vorrichtung zur Untersuchung von Blutproben bekannt, die sich in den für die Blutentnahme verwendeten Gefäßen befinden. Die bekannte Vorrichtung weist die Merkmale de Oberbegriffs des Anspruchs 1 auf.

Aus der Druckschrift EP 0 866 336 A1 ist eine automatische Pipettiervorrichtung bekannt, die die Lage eines Flüssigkeitsspiegels im Bereich einer Pipettenspitze, die in die Flüssigkeit eingetaucht werden soll, erfassen kann. Zu diesem Zweck wird mit einer Beleuchtungsvorrichtung Licht in den Bereich der Pipettenspitze abgestrahlt

Aus der Druckschrift EP 0 250 671 A1 ist eine Pipettiervorrichtung bekannt, die neben einer Pipettenspitze einen optischen Abstandssensor aufweist

Aus der Druckschrift CH 499 096 A ist eine Einrichtung zur Überwachung der Schaumbildung in einem Fermenter bekannt, die ein elektrisches Signal abgibt, wenn die Schaumkrone eine kritische Höhe erreicht. Dabei wird das Licht einer Lampe durch ein abbildendes System auf eine Beleuchtungsstelle im Raum abgebildet.

Davon ausgehend liegt der Erfindung die Aufgabe zugrunde, eine Vorrichtung zum Behandeln von Proben zu schaffen, die die Ermittlung der Lage des Flüssigkeitsspiegels in Gefäßen mit verhältnismäßig geringem Durchmesser und/oder großer Tiefe begünstigt.

Die Aufgabe wird durch eine Vorrichtung mit den Merkmalen des Anspruches 1 gelöst. Vorteilhafte Ausgestaltungen der Vorrichtung sind in den Unteransprüchen angegeben.

Die erfindungsgemäße Vorrichtung zur Behandlung von Flüssigkeiten hat
- eine Beleuchtungseinrichtung zum Beleuchten einer punktförmigen Beleuchtungsstelle im Raum,
- eine punktförmige Lichtempfangseinrichtung mit einem Fotodetektor zum Liefern eines von der Intensität von empfangenem Licht abhängigen Meßsignales,
- ein abbildendes System zum Abbilden der Beleuchtungsstelle auf die punktförmige Lichtempfangseinrichtung
- eine Auswerteeinrichtung zum Erfassen der Annäherung einer Grenzfläche zwischen zwei Medien mit unterschiedlichen Brechzahlen
   an die Beleuchtungsstelle durch Auswerten der vom Fotodetektor gelieferten Meßsignale,
- eine Verstelleinrichtung zum Verstellen der relativen Lage von Beleuchtungsstelle und Grenzfläche in Richtung der optischen Achse des abbildenden Systems, wobei
- die Auswerteeinrichtung das Verstellen der relativen Lage von Beleuchtungsstelle und Grenzfläche durch die Verstelleinrichtung steuern kann,
- die Beleuchtungseinrichtung ebenfalls ein abbildendes System umfasst, das das Licht einer punktförmigen Lichtquelle auf die Beleuchtungsstelle abbildet, und
- das Licht der punktförmigen Lichtquelle über eine Strahlteiler dem abbildenden System zugeführt wird und dasselbe abbildende System die Beleuchtungsstelle über den Strahlteiler auf die Lichtempfangseinrichtung abbildet, dadurch gekennzeichnet, dass
- ein die Beleuchtungsstelle beleuchtender Lichtstrahl der Beleuchtungseinrichtung eine Aperturwinkel von 8° oder darunter aufweist und
- der Abstand der Beleuchtungsstelle von dem abbildenden System 100 mm oder mehr beträgt.

Bei der erfindungsgemäßen Vorrichtung wird die etwa punktförmige Beleuchtungsstelle auf die etwa punktförmige Lichtempfangseinrichtung abgebildet. Infolgedessen ändert sich die Intensität der von der Lichtempfangseinrichtung empfangenen Lichtstrahlung und damit das vom Fotodetektor gelieferte Meßsignal, wenn eine Grenzfläche zwischen zwei Medien mit unterschiedlichen Brechzahlen in die Beleuchtungsstelle eintritt. Somit ist feststellbar, ob sich eine Grenzfläche in der Beleuchtungsstelle befindet oder nicht. Dies ermöglicht es, die Lage einer Grenzfläche festzustellen, die beispielsweise ein Flüssigkeitsspiegel, d.h. die Grenzfläche zwischen einer Flüssigkeit und Luft, sein kann. Ferner ermöglicht dies, die Lage einer Oberfläche eines Objektes festzustellen, die beispielsweise unbedeckt oder mit einem für das Licht der Beleuchtungseinrichtung transparenten Medium bedeckt sein kann (z.B. ein mit Flüssigkeit bedeckter Gefäßboden).

Für die Bestimmung der Lage einer Grenzfläche kann die relative Lage von Beleuchtungsstelle und Grenzfläche verändert werden, bis sich die Grenzfläche in der Beleuchtungsstelle befindet. Ferner ist es möglich, die Oberfläche eines Objektes mit der Beleuchtungsstelle abzutasten, um aufgrund einzelner Werte oder des Verlaufs des Meßsignales auf die Lage des gesamten Objektes und/oder seine Identität zu schließen.

Somit ist mit der erfindungsgemäßen Vorrichtung insbesondere die Höhe des Flüssigkeitsspiegels in Gefäßen (z.B. in Reaktionsgefäßen und in Vertiefungen von Mikrotiterplatten), die Lage und Identität von Gefäßen (z.B. von Reaktionsgefäßen und Mikrotiterplatten) und die Lage und Identität von Werkzeugen und Hilfsmitteln (z.B. Pipettenspitzen in einem Gestell) feststellbar. Da der Lichtstrahl der Beleuchtungseinrichtung und das abbildende System koaxial auf die Beleuchtungsstelle ausgerichtet sind, ist ein berührungsloses Erfassen von Grenzschichten aus größerer Distanz und unter geringem seitlichem Raumbedarf möglich. Dies begünstigt das Erfassen des Flüssigkeitsspiegels in Gefäßen mit verhältnismäßig kleiner Öffnung und/oder verhältnismäßig großer Tiefe.

Es kann gezielt mit Licht einer Wellenlänge gearbeitet werden, für das eine Flüssigkeit (z.B. Wasser) undurchsichtig ist, um einen Flüssigkeitsspiegel frei von Störungen durch nahe Gefäßwände zu erfassen.

Erfaßbar sind sowohl diffus reflektierende Grenzflächen (z.B. matte Oberflächen) als auch im wesentlichen gerichtet reflektierende Grenzflächen (z.B. glänzende Oberflächen oder Flüssigkeitsoberflächen). Vor allem bei im wesentlichen gerichtet reflektierenden Grenzflächen ist das Meßsignal besonders stark, wenn gemäß einer Ausgestaltung die Flächennormale am Ort der Abtastung der Grenzfläche durch die Beleuchtungsstelle etwa koaxial zum beleuchtenden Lichtstrahl und zur optischen Achse des abbildenden Systems ist.

Vorzugsweise umfaßt die Beleuchtungseinrichtung eine eigene Lichtquelle, die beispielsweise ein Laser, eine LED oder ein Glühlämpchen sein kann.

Die Beleuchtungsstelle kann von einem linienförmigen Lichtstrahl beleuchtet sein, der beispielsweise mittels eines Lasers erzeugt werden kann. Durch das abbildende System wird dann auf dem linienförmigen Lichtstrahl eine punktförmige Beleuchtungsstelle definiert, die auf die etwa punktförmige Lichtempfangseinrichtung abgebildet wird.

Die Beleuchtungseinrichtung umfasst ebenfalls ein abbildendes System, das das Licht einer punktförmigen Lichtquelle auf die Beleuchtungsstelle abbildet. Hierdurch hat der beleuchtende Lichtstrahl (oder "Lichtbündel") in der Beleuchtungsstelle die größte Intensität. Zusammen mit der Abbildung der Beleuchtungsstelle auf die Lichtempfangseinrichtung führt dies zu einem besonders starken Meßsignal.

Das Licht der punktförmigen Lichtquelle wird über einen Strahlteiler dem abbildenden System zugeführt und dasselbe abbildende System bildet die Beleuchtungsstelle über den Strahlteiler auf die Lichtempfangseinrichtung ab. Hierdurch wird eine Auflichtmessung verwirklicht. Da nur ein abbildendes System vorhanden ist, ist der Aufwand verhältnismäßig gering.

Nach einer Ausgestaltung weist die Beleuchtungseinrichtung im Strahlengang der Lichtquelle eine Blende und/oder einen Lichtwellenleiter auf, deren Ausgang die punktförmige Lichtquelle bildet.

Die Beleuchtungsstelle beleuchtende Lichtstrahl hat einen Aperturwinkel von 8° oder darunter, so daß der Lichtstrahl ohne Abblendung im Randbereich in Gefäße mit verhältnismäßig kleinem Öffnungsdurchmesser bzw. großer Tiefe einführbar ist.

Der Abstand der Beleuchtungsstelle von dem abbildenden System beträgt 100 mm oder mehr, wodurch eine berührungslose Messung des Flüssigkeitsspiegels in vielen gebräuchlichen Gefäßen möglich ist.

Grundsätzlich kann die punktförmige Lichtempfangseinrichtung ein Fotodetektor mit besonders kleiner lichtempfindlicher Fläche sein. Nach einer Ausgestaltung weist die punktförmige Lichtempfangseinrichtung eine Blende auf, durch die die Größe der Empfängerfläche bestimmt wird.

Nach einer Ausgestaltung weist die Auswerteeinrichtung Mittel zum Filtern des vom Fotodetektor gelieferten Meßsignales auf. Hierdurch kann ein Rauschen des Meßsignals unterdrückt und Fremdlichteinfluß verringert werden.

Nach einer Ausgestaltung ist die Vorrichtung eine automatische Vorrichtung zur Behandlung von Flüssigkeiten (z.B. eine Dosierstation oder eine Workstation). In einer solchen automatischen Vorrichtung können aufgrund der Erfassung der Lage und/oder Identität von Flüssigkeiten und/oder Objekten Abläufe gesteuert werden, beispielsweise das Eintauchen von Pipettenspitzen in Gefäße, die Behandlung von Flüssigkeiten in bestimmten Gefäßen etc.

Die Vorrichtung hat eine Verstelleinrichtung zum Verstellen der relativen Lage von Beleuchtungsstelle und Grenzfläche in Richtung der optischen Achse des abbildenden Systems und optional quer dazu.

Die Verstellung der relativen Lage von Beleuchtungsstelle und Grenzfläche kann auf verschiedene Weisen von der Verstelleinrichtung bewirkt werden. Nach einer Ausgestaltung ist mittels der Verstelleinrichtung die relative Lage der gesamten Optik, die von der Beleuchtungseinrichtung, dem abbildenden System und der Lichtempfangseinrichtung gebildet ist, und der

Grenzfläche verstellbar. Dies kann sowohl für die Verstellung in Richtung der optischen Achse des abbildenden Systems als auch für die Verstellung quer dazu genutzt werden. Dafür kann die gesamte Optik und/oder die Grenzfläche, z.B. mittels eines Objektträgers, verlagert werden. Für das Verstellen in Richtung der optischen Achse hat die Verstelleinrichtung nach einer Ausgestaltung ein im abbildenden System angeordnetes Zoom-Objektiv. Für die Verstellung quer zur optischen Achse kann die Verstelleinrichtung mindestens einen Scan-Spiegel im abbildenden System haben.

Nach einer weiteren Ausgestaltung ist die Verstelleinrichtung motorgetrieben, beispielsweise um in eine automatische Vorrichtung zum Behandeln von Flüssigkeiten integriert zu werden.

Die Auswerteeinrichtung steuert das Verstellen der relativen Lage von Beleuchtungsstelle und Grenzfläche durch die Verstelleinrichtung. Dann kann das Verstellen in Abhängigkeit von den Meßsignalen erfolgen, beispielsweise um die Beleuchtungsstelle auf die Grenzfläche einzustellen und/oder entlang der Grenzfläche zu verfahren.

Nach einem Verfahren zum Betreiben einer erfindungsgemäßen Vorrichtung wird
- der Abstand zwischen der Beleuchtungsstelle und einer Grenzfläche verändert, das Maximum des Meßsignals beim Verändern des Abstandes ermittelt und die Lage der Beleuchtungsstelle beim Maximum des Meßsignals als Lage des Flüssigkeitsspiegels bestimmt und/oder
- die Beleuchtungsstelle im wesentlichen parallel zur Grenzfläche verlagert, einzelne Werte oder der Verlauf des Meßsignals beim Verlagern ermittelt und die Lage und/oder Identität der Grenzfläche aufgrund der Werte oder des Verlaufs des Meßsignals ermittelt.

Mit diesem Verfahren ist die Lage eines Flüssigkeitsspiegels und/oder eines festen Objektes und/oder die Identität eines festen Objektes bestimmbar. Mit der Grenzfläche ist zugleich die Flüssigkeit oder das Objekt identifiziert.

Nach einer Ausgestaltung wird die Lage und/oder Identität aufgrund eines Vergleichs der Meßwerte mit Referenzdaten über die Gestaltung und/oder die Reflexionseigenschaften der Grenzfläche ermittelt. Die Referenzdaten können beispielsweise gespeichert sein.

Schließlich wird nach einer Ausgestaltung die Beleuchtungsstelle auf eine Referenzfläche eingestellt und ein Referenzsignal gemessen, das als Bezugspunkt für das Meßsignal dient.

Die Erfindung wird nachfolgend mit Bezug auf die anliegenden Zeichnungen eines Ausführungsbeispieles näher erläutert. In den Zeichnungen zeigen:
- Fig. 1: grobschematischer Aufbau einer Vorrichtung zum Erfassen von Grenzflächen;
- Fig. 2: Lagemessung an einer Wasseroberfläche mit verschiedenen Blenden in einem Diagramm mit dem Abstand der Wasseroberfläche auf der Abszisse, dem Meßsignal auf der Ordinate und dem Blendendurchmesser als Kurvenparameter;
- Fig. 3: maximales Signal der Lichtempfangseinrichtung bei Reflexionsmessung an verschiedenen Oberflächen mit der Oberflächenbeschreibung auf der Abszisse und dem Meßsignal auf der Ordinate;
- Fig. 4: horizontale Abtastung einer Mikrotiterplatte mit 384 Wells in einem Diagramm mit der Abtaststrecke auf der Abszisse und dem Meßsignal auf der Ordinate;
- Fig. 5: Abtastsignal eines Barcodes in einem Diagramm mit der Abtaststrecke auf der Abszisse und dem Meßsignal auf der Ordinate;
- Fig. 6: Barcode auf Etikett mit Aluminiumbeschichtung, der der Abtastung gemäß Fig. 5 zugrunde liegt.

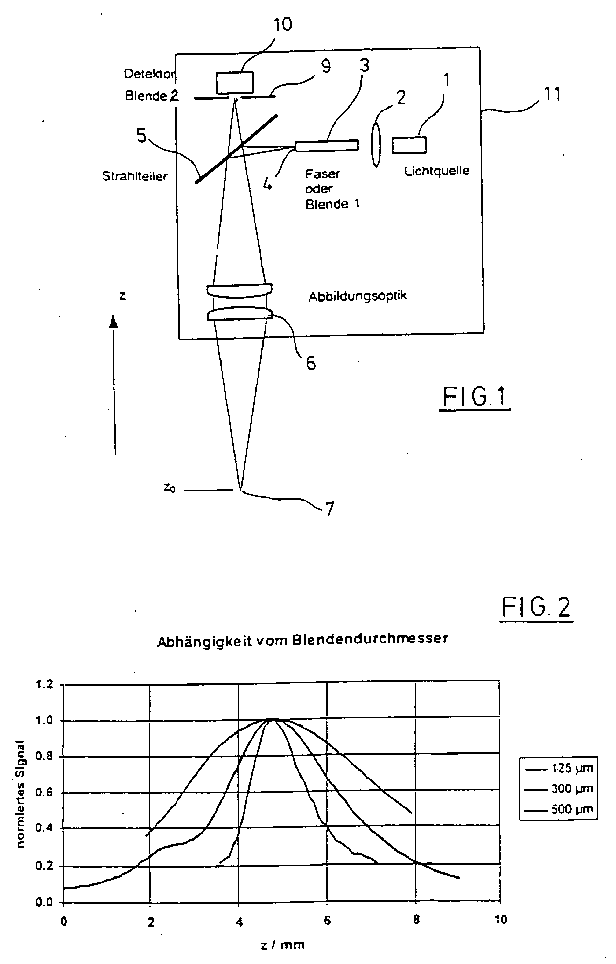

Gemäß Fig. 1 hat die Vorrichtung eine Lichtquelle 1, die einen Lichtstrahl durch eine Linse 2 auf eine Blende 3 oder einen Lichtwellenleiter richtet.

Die Öffnung 4 der Blende 3 bzw. des Lichtwellenleiters bildet infolgedessen eine punktförmige Lichtquelle, aus der das Licht über einen Strahlteiler 5 auf eine Abbildungsoptik 6 gespiegelt wird. Von der Abbildungsoptik 6, die ein Objektiv umfaßt, wird das Licht in einem Abstand z₀ fokussiert. Im Fokus befindet sich somit eine punktförmige Beleuchtungsstelle 7.

Die Abbildungsoptik 6 bildet die Beleuchtungsstelle 7 durch den Strahlteiler 5 auf die Öffnung 8 einer Blende 9 ab, hinter der sich ein Fotodetektor 10 befindet. Die Öffnung 8 der Blende 9 hat denselben Durchmesser wie die Öffnung 4 der Blende 3. Außerdem haben die Öffnungen 8, 4 dieselbe optische Entfernung vom Strahlteiler 5.

Befindet sich an der Beleuchtungsstelle eine diffus oder gerichtet reflektierende Fläche (letztere etwa senkrecht zur optischen Achse der Abbildungsoptik 6 ausgerichtet), so gelangt reflektiertes Licht durch die Blende 9 auf dem Fotodetektor 10. Wird die gesamte Optik 11 in z-Richtung bewegt, so ändert sich die vom Fotodetektor 10 gemessene Lichtintensität. Sie wird maximal, wenn sich die reflektierende Grenzfläche genau in der Beleuchtungsstelle 7 befindet, d.h. im Abstand z₀ von der Abbildungsoptik 6.

Der Abstand z₀ einer Grenzfläche bzw. die Lage der Grenzfläche wird also durch Abtasten in z-Richtung bestimmt.

Für das Erfassen einer Flüssigkeitsoberfläche wird der Lichtstrahl durch eine Gefäßöffnung in eine Gefäß eingeführt. Bei einem Gesamtöffnungswinkel (Aperturwinkel) des Lichtstrahls von ca. 8° und einem Abstand z₀ von 100 mm muß der freie Durchmesser der Öffnung des Gefäßes ca. 14 mm betragen, wenn in einer Tiefe z₀ im Gefäß gemessen werden soll.

Beim Abtasten (Scannen) in Querrichtung zur optischen Achse der Abbildungsoptik 6 (x-Richtung) zeigt eine Intensitätsänderung eine Erhebung oder Vertiefung der abgescannten Fläche an, aber auch eine Änderung des Reflexionsgrades.

Der Gesamtöffnungswinkel des Lichtstrahles und die Durchmesser der Öffnungen 4, 8 der Blenden 3, 9 beeinflussen die Meßgenauigkeit der Vorrichtung. Sie wird um so größer, je größer der Gesamtöffnungswinkel und je kleiner der Durchmesser ist.

Bei einem Ausführungsbeispiel ist die Lichtquelle 1 eine Laserdiode mit einer Wellenlänge von 670 Nanometer, die über eine Lichtleitfaser mit 125 µm Durchmesser angekoppelt ist. Der Durchmesser der Öffnung 6 der Blende 7 beträgt ca. 100 µm. Als Fotodetektor dient eine Si-Fotodiode VTB 5051 von EG & G FVCTEC.

Die Fig. 2 zeigt die Erhöhung der Meßgenauigkeit mit abnehmendem Durchmesser der Blendenöffnung bei Messung der Lage einer Wasseroberfläche. Der Nullpunkt von z ist willkürlich gewählt.

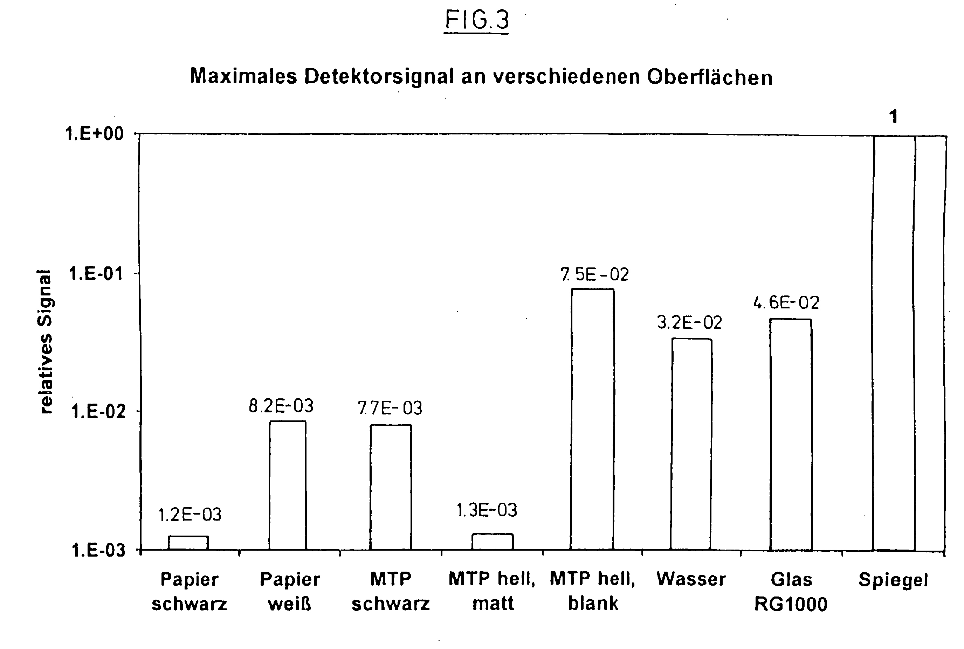

Da unterschiedliche Grenzflächen verschieden stark reflektieren, überstreicht die Höhe der Meßsignale einen weiten Bereich. Mit der oben beschriebenen Vorrichtung wurden an verschiedenen Grenzflächen am Fotodetektor die in Fig. 3 dargestellten Ströme im Intensitätsmaximum gemessen. Ein Objekt kann anhand der Meßsignale identifiziert werden, die von verschiedenen in ihm enthaltenen Grenzflächen herrühren.

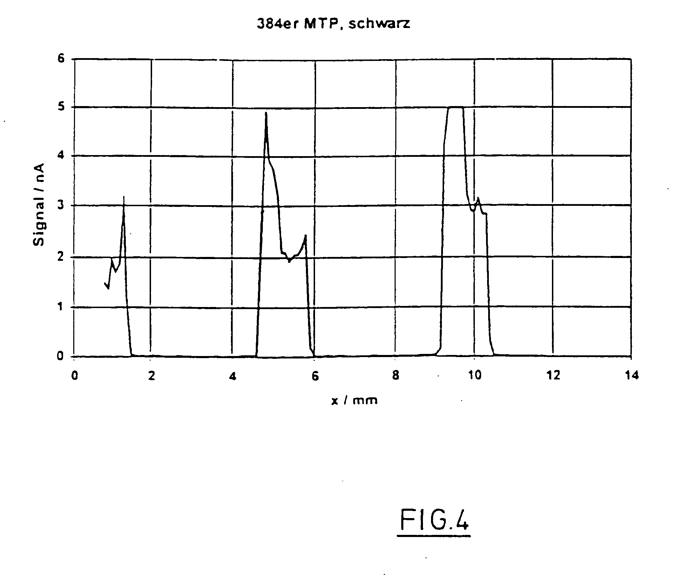

In Fig. 4 ist der am Fotodetektor 10 gemessene Strom beim Abtasten der Oberfläche einer schwarzen Mikrotiterplatte mit 384 Aufnahmen dargestellt. Die Minima des Stroms indizieren das Abtasten einer Aufnahme (sog. "well") und die Peaks dazwischen die Oberflächenabschnitte zwischen den Aufnahmen. Durch Auswerten des Meßsignals ist feststellbar, daß die charakteristischen Abmessungen einer 384er Mikrotiterplatte vorliegen. Ein Automat kann somit das Vorliegen einer 384er Mikrotiterplatte erkennen und darauf Dosiervorgänge ausrichten.

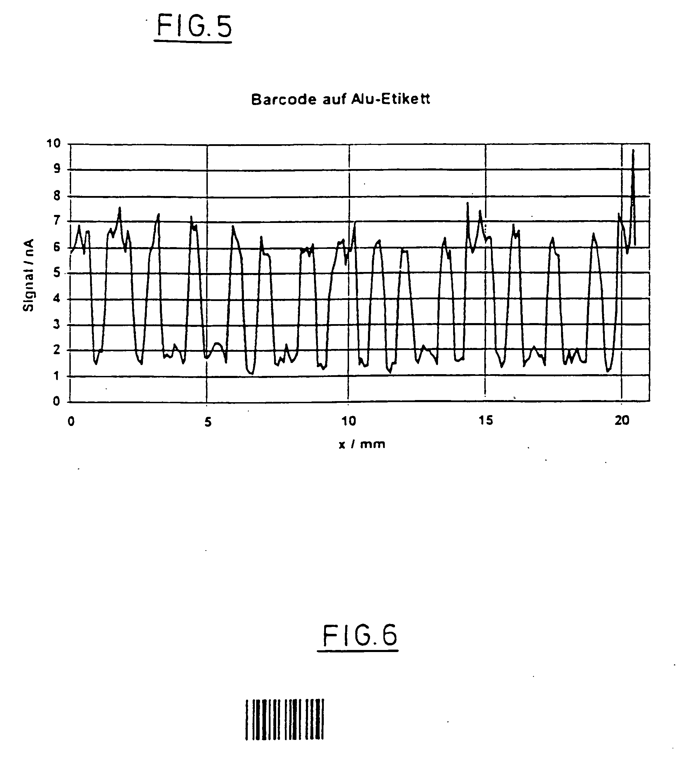

Die Fig. 5 zeigt den am Fotodetektor 10 gemessenen Strom beim Abtasten der Oberfläche des Barcodes, der in Fig. 6 gezeigt ist. Dabei sind die Intensitätsminima den dunklen und Intensitätsmaxima den hellen Streifen des Barcodes zugeordnet. Dies ermöglicht die automatische Identifizierung eines Objektes, das mit Barcodes gekennzeichnet ist.

## Patentansprüche

1. Vorrichtung zur Ermittlung der Lage des Flüssigkeitsspiegels in Gefäßen an einer Vorrichtung zur Behandlung von Flüssigkeiten mit
- einer Beleuchtungseinrichtung (1 bis 6) zum Beleuchten einer punktförmigen Beleuchtungsstelle (7) im Raum,
- einer punktförmigen Lichtempfangseinrichtung (9, 10) mit einem Fotodetektor (10) zum Liefern eines von der Intensität von empfangenem Licht abhängigen Meßsignales,
- einem abbildenden System (6) zum Abbilden der Beleuchtungsstelle (7) auf die punktförmige Lichtempfangseinrichtung (9, 10),
- einer Auswerteeinrichtung zum Erfassen der Annäherung einer Grenzfläche zwischen zwei Medien mit unterschiedlichen Brechzahlen an die Beleuchtungsstelle (7) durch Auswerten der vom Fotodetektor (10) gelieferten Meßsignale,
- einer Verstelleinrichtung zum Verstellen der relativen Lage von Beleuchtungsstelle (7) und Grenzfläche in Richtung der optischen Achse des abbildenden Systems (6), wobei
- die Auswerteeinrichtung zur Steuerung des Verstellens der relativen Lage von Beleuchtungsstelle (10) und Grenzfläche durch die Verstelleinrichtung ausgebildet ist,
- die Beleuchtungseinrichtung (1 bis 6) ebenfalls ein abbildendes System (6) umfasst, das das Licht einer punktförmigen Lichtquelle (1 bis 4) auf die Beleuchtungsstelle (7) abbildet, und
- das Licht der punktförmigen Lichtquelle (1 bis 4) über einen Strahlteiler (5) dem abbildenden System (6) zugeführt wird und dasselbe abbildende System (6) die Beleuchtungsstelle (7) über den Strahlteiler (5) auf die Lichtempfangseinrichtung (9, 10) abbildet, **dadurch gekennzeichnet, dass**
- ein die Beleuchtungsstelle (7) beleuchtender Lichtstrahl der Beleuchtungseinrichtung (1 bis 6) einen Aperturwinkel von 8° oder darunter aufweist und
- der Abstand der Beleuchtungsstelle (7) von dem abbildenden System (6) 100 mm oder mehr beträgt.

2. Vorrichtung nach Anspruch 1, bei der die Beleuchtungseinrichtung (1 bis 6) eine Lichtquelle (1) umfaßt.

3. Vorrichtung nach Anspruch 2, bei der die Lichtquelle (1) ein Laser, eine LED oder ein Glühlämpchen ist.

4. Vorrichtung nach einem der Ansprüche 1 bis 3, bei der die Beleuchtungseinrichtung (1 bis 6) im Strahlengang der Lichtquelle (1) eine Blende (3) und/oder einen Lichtwellenleiter aufweist.

5. Vorrichtung nach einem der Ansprüche 1 bis 4, bei der die punktförmige Lichtempfangseinrichtung (9, 10) eine Blende (9) aufweist.

6. Vorrichtung nach einem der Ansprüche 1 bis 5, bei der die Auswerteeinrichtung Mittel zum Filtern des vom Fotodetektor (10) gelieferten Meßsignals aufweist.

7. Vorrichtung nach einem der Ansprüche 1 bis 6, die eine Verstelleinrichtung zum Verstellen der relativen Lage von Beleuchtungsstelle (7) und Grenzfläche quer zur Richtung der optischen Achse des abbildenden Systems (6) aufweist.

8. Vorrichtung nach Anspruch 7, bei der mittels der Verstelleinrichtung die relative Lage der von der Beleuchtungseinrichtung (1 bis 6), dem abbildenden System (6) und der Lichtempfangseinrichtung (9, 10) gebildeten Optik (11) und der Grenzfläche verstellbar ist.

9. Vorrichtung nach einem der Ansprüche 7 oder 8, bei der die Verstelleinrichtung ein Zoom-Objektiv (6) im abbildenden System aufweist.

10. Vorrichtung nach einem der Ansprüche 7 bis 9, bei der die Verstelleinrichtung motorgetrieben ist.

11. Vorrichtung nach Anspruch 11, die eine automatisch arbeitende Vorrichtung ist.

12. Vorrichtung nach einem der Ansprüche 1 bis 11, bei der die Vorrichtung Objekte mit optisch abtastbaren Markierungen zu ihrer Identifizierung umfaßt.

13. Verwendung der Vorrichtung nach einem der Ansprüche 1 bis 12 zur Erfassung der Lage von Objekten und/oder Identität von Objekten anhand eines Vergleiches der Messwerte mit gespeicherten Referenzdaten über die Gestaltung und/oder die Reflexionseigenschaften der Grenzfläche.

14. Verwendung der Vorrichtung nach Anspruch 13 zur Erfassung der Lage von Flüssigkeitsspiegeln in Reaktionsgefäßen und/oder in Mikrotiterplatten und/oder der Lage von Reaktionsgefäßen und/oder von Mikrotiterplatten und/oder von Pipettenspitzen und/oder der Identität von Reaktionsgefäßen und/oder von Mikrotiterplatten und/oder von Pipettenspitzen.

## Claims

1. An apparatus for determining the position of the liquid level in containers disposed on an apparatus for handling liquids, comprising:
- a lighting installation (1 to 6) for lighting an approximately punctiform illumination point (7) in the room,
- an approximately punctiform light-receiving device (9, 10) having a photodetector (10) for providing a measuring signal dependent on the intensity of the light received,
- an imaging system (6) for imaging the illumination point (7) onto the approximately punctiform light-receiving device (9, 10),
- an evaluation device for detecting the approaching of an interface between two media of different refractive indices to the illumination point (7) by evaluating the measuring signals provided by the photodetector (10),
- a shifting device to displace the relative position of the illumination point (7) and the interface towards the optical axis of the imaging system (6),
- the evaluation device for controlling the displacement of the relative position of the illumination point (7) and interface via the shifting device,
- the lighting installation (1 to 6) also comprising an imaging system (6) which images the light of a punctiform light source (1 to 4) onto the illumination point (10), and,
- the light of the punctiform light source (1 to 4) is fed to the imaging system (6) via a beam splitter (5) and the same imaging system (6) images the illumination point (7) onto the light-receiving device (9, 10) via the beam splitter (5), **characterized in that**
- the light beam of the lighting installation (1 to 6) lighting the illumination point (7) has an aperture angle of 8° or less and
- the distance of the illumination point (7) from the imaging system (6) is 100 mm or more.

2. The apparatus as claimed in claim 1 wherein the lighting installation (1 to 6) comprises a light source (1).

3. The apparatus as claimed in claim 2 wherein the light source (1) is a laser, LED or small bulb.

4. The apparatus as claimed in any one of claims 1 to 3 wherein the lighting installation (1 to 6) has a diaphragm stop (3) und/or an optical waveguide in the optical path of the light source (1).

5. The apparatus as claimed in any one of claims 1 to 4 wherein the punctiform light-receiving device (9, 10) has a diaphragm stop (9).

6. The apparatus as claimed in any one of claims 1 to 5 wherein the evaluation device has means for filtering the measuring signal provided by the photodetector (10).

7. The apparatus as claimed in any one of claims 1 to 6 which has a shifting device to displace the relative position of the illumination point (7) and the interface towards the optical axis of the imaging system (6).

8. The apparatus as claimed in claim 7 wherein the relative position of the optical system (11) formed by the lighting installation (1 to 6), the imaging system (6), and the light-receiving device (9, 10) and the interface is adapted to be displaced by means of the shifting device.

9. The apparatus as claimed in one of claims 7 or 8 wherein the shifting device has a zoom objective (6) in the imaging system.

10. The apparatus as claimed in any one of claims 7 to 9 wherein the shifting device is driven by a motor.

11. The apparatus as claimed in claim 10 which is an automatic apparatus.

12. The apparatus as claimed in any one of claims 1 to 11 which detects objects having optically sensable markings in order to identify them.

13. Usage of the apparatus as claimed in any one of claims 1 to 12 for detecting the location of objects and/or the identity of objects by means of a comparison of the measured values with the stored reference data via the construction and/or the reflexion properties of the interface.

14. Usage of the apparatus as claimed in claim 13 for detecting the location of liquid levels in reaction vessels and/or microtitration plates and/or the location of reaction vessels and/or microtitration plates and/or pipette tips and/or the identity of reaction vessels and/or microtitration plates and/or pipette tips.

## Revendications

1. Dispositif de détection de la position du niveau de liquide dans des vaisseaux sur un dispositif de traitement de liquides, avec
• un équipement d'illumination (1 à 6) pour illuminer une place ponctuelle (7) dans l'espace,
• un équipement récepteur de lumière ponctuel (9, 10) avec un détecteur photoélectrique (10) pour fournir un signal de mesure dépendant de l'intensité de la lumière reçue,
• un système imageant (6) pour imager la place d'illumination (7) sur l'équipement récepteur de lumière ponctuel (9, 10),
• un équipement d'interprétation pour saisir le rapprochement d'une interface entre deux médias avec indices de réfraction différents vers la place d'illumination (7) par interprétation des signaux de mesure fournis par le détecteur photoélectrique (10),
• un équipement d'ajustage pour ajuster la position relative de la place d'illumination (7) et de l'interface dans la direction de la ligne de collimation du système imageant (6), dans lequel
• l'équipement d'interprétation est configuré à commander l'ajustage de la position relative de la place d'illumination (7) et de l'interface par l'équipement d'ajustage,
• l'équipement d'illumination (1 à 6) comporte aussi un système imageant (6) qui image la lumière d'une source de lumière ponctuelle (1 à 4) sur la place d'illumination (7), et
• la lumière de la source de lumière ponctuelle (1 à 4) est conduit au système imageant (6) via un séparateur de faisceaux (5), et le même système imageant (6) image la place d'illumination (7) sur l'équipement récepteur de lumière (9, 10) via le séparateur de faisceaux (5), **caractérisé en ce que**
• un rayon de lumière de l'équipement d'illumination (1 à 6) illuminant la place d'illumination (7) a un angle d'ouverture de 8° ou moins, et
• la distance de la source d'illumination (7) du système imageant (6) est 100 mm ou plus.

2. Dispositif selon la revendication 1, dans lequel l'équipement d'illumination (1 à 6) comporte une source de lumière (1).

3. Dispositif selon la revendication 2, dans lequel la source de lumière (1) est un laser, une LED ou une petite lampe à incandescence.

4. Dispositif selon l'une quelconque des revendications 1 à 3, dans lequel l'équipement d'illumination (1 à 6) a un diaphragme (3) et/ou une fibre optique dans le trajectoire du faisceau de la source de lumière (1).

5. Dispositif selon l'une quelconque des revendications 1 à 4, dans lequel l'équipement récepteur de lumière ponctuel (9, 10) a un diaphragme (9).

6. Dispositif selon l'une quelconque des revendications 1 à 5, dans lequel l'équipement d'interprétation a des moyens pour filtrer le signal de mesure fourni par le détecteur photoélectrique (10).

7. Dispositif selon l'une quelconque des revendications 1 à 6, qui a un équipement d'ajustage pour ajuster la position relative de la place d'illumination (7) et de l'interface en diagonale de la direction de la ligne de collimation du système imageant (6).

8. Dispositif selon la revendication 7, dans lequel la position relative du système optique (11) et l'interface est ajustable par le biais de l'équipement d'ajustage, le système optique (11) étant formé par l'équipement d'illumination (1 à 6), le système imageant (6) et l'équipement récepteur de lumière (9, 10).

9. Dispositif selon une des revendications 7 ou 8, dans lequel l'équipement d'ajustage comporte un objectif à focale variable (6) dans le système imageant.

10. Dispositif selon l'une quelconque des revendications 7 à 9, dans lequel l'équipement d'ajustage est entraîné par moteur.

11. Dispositif selon la revendication 11, qui est un dispositif fonctionnant de manière automatique.

12. Dispositif selon l'une quelconque des revendications 1 à 11, dans lequel le dispositif comporte des objets avec des marques optiquement explorables pour leur identification.

13. Utilisation du dispositif selon l'une quelconque des revendications 1 à 12 pour la saisie de la position d'objets et/ou de l'identité d'objets à l'aide d'une comparaison des valeurs de mesure avec des données de référence mémorisées concernant la forme et/ou les propriétés de réflexion de l'interface.

14. Utilisation du dispositif selon la revendication 13 pour la saisie de la position de niveaux de liquide dans des vaisseaux de réaction et/ou dans des plaques de microtitration et/ou de la position de vaisseaux de réaction et/ou de plaques de microtitration et/ou de pointes de pipette et/ou de l'identité de vaisseaux de réaction et/ou de plaques de microtitration et/ou de pointes de pipette.
